(19) **Europäisches Patentamt**

**European Patent Office**

**Office européen des brevets**

(11) **EP 0 824 217 B1**

(12) **EUROPEAN PATENT SPECIFICATION**

(45) Date of publication and mention
of the grant of the patent:
**22.01.2003 Bulletin 2003/04**

(51) Int Cl.7: **G02F 1/00**

(21) Application number: **97201890.7**

(22) Date of filing: **20.06.1997**

(54) **Optical materials**

Optische Materialien

Matériaux optiques

(84) Designated Contracting States:
**DE FR GB**

(30) Priority: **13.08.1996 JP 21341796**

(43) Date of publication of application:
**18.02.1998 Bulletin 1998/08**

(73) Proprietor: **NIPPON TELEGRAPH AND
TELEPHONE CORPORATION
Shinjuku-ku, Tokyo 163-19 (JP)**

(72) Inventors:
 • **Yagi, Shogo
  Hitachinaka-shi, Ibaraki (JP)**
 • **Ono, Michio
  Hitachi-shi, Ibaraki (JP)**
 • **Imai, Tadayuki
  Mito Shi, Ibaraki (JP)**
 • **Yamazaki, Hiroki
  Naka-gun, Ibaraki (JP)**

(74) Representative: **Lunt, Mark George Francis et al
Harrison Goddard Foote,
Fountain Precinct,
Leopold Street
Sheffield S1 2QD (GB)**

(56) References cited:
 • **NEURGAONKAR R R ET AL: "Progress in
photorefractive tungsten bronze crystals"
JOURNAL OF THE OPTICAL SOCIETY OF
AMERICA B (OPTICAL PHYSICS), FEB. 1986,
USA, vol. 3, no. 2, pages 274-282, XP002081327
ISSN 0740-3224**
 • **JINSONG LIU ET AL: "Anomalous temperature
character of phase conjugation in
doped-LiNbO/sub 3/ crystal" APPLIED PHYSICS
LETTERS, 2 OCT. 1995, USA, vol. 67, no. 14,
pages 2020-2021, XP002081242 ISSN 0003-6951**
 • **YASUYUKI SUGIYAMA ET AL: "GROWTH AND
PHOTOREFRACTIVE PROPERTIES OF A- AND
C-AXIS CERIUM -DOPED STRONTIUM BARIUM
NIOBATE SINGLE CRYSTAL FIBERS" IEEE
PHOTONICS TECHNOLOGY LETTERS, vol. 3,
no. 8, 1 August 1991, pages 744-746,
XP000223754**
 • **VORONOV V V ET AL: "Photoelectric and
photorefractive properties of cerium-doped
barium strontium niobate crystals"
KVANTOVAYA ELEKTRONIKA, MOSKVA, SEPT.
1979, USSR, vol. 6, no. 9, pages 1993-1999,
XP002081328 ISSN 0368-7147**

## Description

The present invention relates to optical materials, and more particularly to optical storage device, for example, hologram storage devices. Further, the present invention relates to optical devices utilizing such optical materials, for example, phase conjugated mirror for use in optical measurement, optical amplifiers for use in optical communication, and the like. Also, the present invention relates to hologram storage medium applicable to real time holography utilizing photorefractive crystals capable of forming distribution of refractive index similar to optical interference rings.

There has been known the technology called "holography," which uses laser radiation as a light source to interfere light scattered by an object (also called as an object beam or a signal beam) with non-scattered light from the same light source (also called as a reference beam or a pump beam) to form interference fringes or patterns which are stored on an optically storable storage medium such as photographic dry plate and upon reproduction, the stored interference fringes are irradiated with the reference beam to reproduce the scattered light. In the case where the storage medium has a depth long enough as compared with the wavelength of the storage beam, it is possible to store a plurality of holograms in one and the same storage medium. In this case the technology is called volume multiplexing holography.

A certain kinds of dielectric substances called photorefractive materials undergo changes in their refractive indices upon irradiation of light so that they can be used as a storage medium for volume multiple holography.

Recently, it has been becoming more popular for individuals to digitize images and send or receive the digitized images on internet communication which has acquired a rapidly increasing number of users. Although at present, still images are communicated in most cases, there is expected an increasing need for motion pictures or animation. Therefore, development of large volume, high transmission density storage media will be needed both by personal users and for use in huge network systems.

Small-sized storage devices for individual users and the like are roughly grouped into magnetic hard disk drivers and removable disk drivers. Here, by the term "removable disk drivers" are meant storage media that can be detached from the storage device and are portable, such as floppy disks (FD) and magneto-optic disks (MO). An increasing need for such storage media will be promising if high capacity products are developed. Digitized video disks (DVDs), successors of compact disks (CDs) which fall in the category of removable storage devices include those which are writable and it is expected they will completely replace thereby CD-ROMs in future. However, their capacities are at most 17 Gbytes for read only standard, and most of them currently have a capacity of 4.7 Gbytes, with writable type ones having a capacity of 2.6 Gbytes. NTSC television images compacted with MPEG-2 (Moving Picture Experts Group-2) are stored over a time of 133 minutes only on a 4.7 Gbytes medium so that storage time will be insufficient for HDTVs (High Density Televisions). Hard disk drives which are not governed by diffraction-limit of light, such as DVD and MO, have a limitation in surface density specific to the material used for the storage medium. For example, the capacity of array-type HDDs is said to be up to 100 Gbytes. On the other hand, turning to the data transmission speed, conventional storage media, including HDDs and Mos, access is made in a bit-by-bit mode to transmit information serially so that their data transmission speed remains to a level of several tens Mbits/second. For non-compacted HDTV, access must be made at a speed of 1.2 Gbits/second, which is not achievable with the conventional devices.

In contrast, there are known digital holographic memories utilizing photorefractive materials that are attracting attention as data storage systems of next generation. In photorefractive materials when exposed to light electrons or holes are excited and migrate therein to form a charge distribution having a pattern similar to interference fringe of light. The charge distribution creates an electric field distribution, which in turn creates refractive index distribution in the material due to electro-optic effects. This effect is called photorefractive effect. Digital holographic memories based on the photorefractive effect are expected to have a surface density of 13 Gbytes/inch$^2$ without utilizing any special technology. This surface density is about 100 times as high as the density of HDD that is expected to be attained in the year of 2000. Disk media of the same diameter of 12 cm as that of DVDs have a data storage capacity of 230 Gbytes/disk, which is 50 times as high as that of current DVDs and 1000 times as high as that of current MOs. Furthermore, holographic memories are featured by en bloc read-out of 2-dimensional images to a size of as large as Mbits. Adoption of parallel transmission will increase the transmission speed drastically. Reading-out of images at a rate of several thousands sheets a second will be sufficient for allowing the storage media to operate at a speed required for the reproduction of motion pictures on HDTV and UDTV. Holographic memories are based on non-contact storage in the same manner as DVDs and MOs so that they can be applicable to removable type devices as well as to stationary type HDDs.

Performances required for photorefractive materials as a medium for digital holographic memories include high photosensitivity, long lifetime and the like. Photosensitivity is an amount relative to the speed of generation of charge distribution as a result of photorefractive effect and the charge distribution will be formed quicker, the higher the photosensitivity of the material at the same intensity of irradiated light. In other words, the higher the photosensitivity of a material, the more quicker the writing can be performed. On the other hand, the charge distribution once formed will be maintained in the dark after the irradiation is over. However, the charge distribution has a lifetime and will be diminishing exponentially with lapse of time due to thermal excitation. Of course, memories had better have a lifetime which is as long as possible.

Conventionally, there has mainly been used $LiNbO_3$ as a photorefractive material for use in holographic memories (John F. Heanue, Matthew C. Bashaw, Lambertus Hesselink, "Volume Holographic Storage and Retreival of Digital Data", Science, Vol. 265, 5 August 1994). This is attributable mainly to development and maturity of the technology of growing $LiNbO_3$ and ease in availability of large, optically uniform, high quality single crystals. Turning to the performance of $LiNbO_3$ as a photorefractive material, conventional $LiNbO_3$ materials have an advantage of long lifetime, e.g., as long as on the order of year. However, these materials have insufficient photosensitivity so that writing speed is at level of a nonrealistic figure. Although the actual figures may vary to some extent depending on the type of operation, it is about 3 years until 1 Tbyte information can be stored on $LiNbO_3$ devices. In contrast, Ce-doped strontium barium niobate (SBN) has a photosensitivity superior to the conventional $LiNbO_3$ materials by two digits and is promising but has a lifetime of only several months much inferior to the $LiNbO_3$ materials.

The conventional holographic storage media described above have a disadvantage that electrons are excited not only by light but also by temperature slightly so that when photorefractive materials are kept in the dark the charge distribution formed will disappear gradually, thus losing the hologram stored.

Generation of phase conjugate waves is observed in various nonlinear phenomena such as induced Brillouin scattering and the like. This is also observed in crystals exhibiting a photorefractive effect. An advantage of generating phase conjugate waves by a photorefractive effect is that the threshold of light intensity is low or rather threshold-less with a disadvantage being a slow response. Various types of phase conjugation mirrors are made of photorefractive materials. For example, there are double phase-conjugation (DPC), also termed as mutually pumped phase conjugation (MPPC) as disclosed in S. Sternklar, S. Weiss, M Segev and B. Fishelf, Opt. Lett., 11 (1986) 528.

In Neurgaonkar, Journal of the Optical Society of America 1986, pages 274-282 there is disclosed a strontium barium niobate crystal containing cerium and iron as impurities.

In Liu, Applied Physics Letters 1995, pages 2020-2021, there is disclosed a lithium niobate crystal containing cerium and europium as impurities. Anomalous photorefractive phase conjugate reflectivity increases are observed at 55, 70 and 110°C.

With a view to solving the above-described problems, an object of the present invention is to provide an optical material which solves or alleviates the problem of loss of holograms even when kept in the dark, increases the photosensitivity of generation of refractive index distribution and has an improved speed of response.

Another object of the present invention is to provide an optical device which uses such an optical material to realize a photorefractive effect having improved characteristics.

Still another object of the present invention is to provide a phase conjugate mirror utilizing such an optical material.

Yet another object of the present invention is to provide an optical amplifier utilizing such an optical material having improved characteristics.

Further, another object of the present invention is to provide a method of producing an optical material having a photorefractive effect.

In order to achieve the above-described objects, the present invention provides, in its first aspect, an optical material comprising a strontium barium niobate single crystal containing europium and cerium as impurities.

Here, the strontium barium niobate single crystal may have a composition represented by chemical formula:

$$Sr_xBa_{1-x}Nb_2O_6$$

wherein x satisfies $0.25 \leqq x \leqq 0.75$. The strontium barium niobate single crystal may have a congruent molten composition.

The strontium barium niobate single crystal may have a chemical formula:

$$Sr_{0.61}Ba_{0.39}Nb_2O_6.$$

In its second aspect, the present invention provides a method of producing an optical material, comprising the steps of:

providing a mixture of strontium, barium, niobium and oxygen as major ingredients and cerium and europium as impurities; and
growing a single crystal comprising strontium barium niobate containing europium and cerium as impurities by a single crystal growth method.

In its third aspect, the present invention provides a method of producing an optical material, comprising the steps of:

growing a strontium barium niobate single crystal having a composition of $Sr_{0.61}Ba_{0.39}Nb_2O_6$ by a single crystal growth method or a composition having Sr:Ba proportion changed within a range of ± 10%;
making a rod from the strontium barium niobate single crystal;
depositing at least one of cerium and europium on said rod: and
incorporate in the single crystal the at least one of cerium and europium as impurity or impurities by a pedestal growth method.

In its fourth aspect, the present invention provides a holographic storage medium comprising a strontium barium niobate single crystal containing europium and cerium as impurities.

Here, the strontium barium niobate single crystal may have a composition represented by chemical formula:

$$Sr_xBa_{1-x}Nb_2O_6$$

wherein x satisfies $0.25 \leqq x \leqq 0.75$.

The strontium barium niobate single crystal may have a congruent molten composition.

The strontium barium niobate single crystal may have a chemical formula:

$$Sr_{0.61}Ba_{0.39}Nb_2O_6.$$

In its fifth aspect, the present invention provides an optical device including an element, which comprises an optical material comprising a strontium barium niobate single crystal containing europium and cerium as impurities.

Here, the element may be a phase conjugate mirror.

Here, the strontium barium niobate single crystal may have a composition represented by chemical formula:

$$Sr_xBa_{1-x}Nb_2O_6$$

wherein x satisfies $0.25 \leqq x \leqq 0.75$.

The strontium barium niobate single crystal may have a congruent molten composition.

The strontium barium niobate single crystal may have a chemical formula:

$$Sr_{0.61}Ba_{0.39}Nb_2O_6.$$

Also, the element may be an optical amplifier.

The strontium barium niobate single crystal may have a composition represented by chemical formula:

$$Sr_xBa_{1-x}Nb_2O_6$$

wherein x satisfies $0.25 \leqq x \leqq 0.75$.

The strontium barium niobate single crystal may have a congruent molten composition.

The strontium barium niobate single crystal may have a chemical formula:

$$Sr_{0.61}Ba_{0.39}Nb_2O_6.$$

The above and other objects, effects, features and advantages of the present invention will become more apparent from the following description of the embodiments thereof taken in conjunction with the accompanying drawings.

Fig. 1 is a schematic diagram illustrating a method of producing a holographic storage medium according to an embodiment of the present invention, illustrating a method of preparing a europium-deposited $Ce:SBN_{61}$ material;

Fig. 2 is a schematic diagram illustrating a method of growing a $Eu,Ce:CBN_{61}$ single crystal fiber;

Fig. 3 is a perspective view showing a sample used for the measurement of the lifetime of a holographic storage medium;

Fig. 4 is a schematic diagram showing an apparatus for measuring the lifetime of a holographic storage medium;

Fig. 5 is a graph plotting results of measurement of half-life of diffracted light intensity of a holographic storage medium, illustrating a dependence of the half-life on temperature;

Fig. 6 is a graph plotting expected lifetime of a holographic storage medium from the data illustrated in Fig. 5, indicating relationship between the expected lifetime at $25°C$ and the amount of europium added;

Fig. 7 is a schematic view showing an ordinary mirror, illustrating the action of reflection of light;

Fig. 8 is a schematic view showing a phase conjugate mirror according to an embodiment of the present invention, illustrating the action of reflection of light;

Fig. 9A is a schematic perspective view showing elements for fabricating a phase conjugate mirror, illustrating the condition before a single crystalline fiber is bonded to a copper plate;

Fig. 9B is a schematic perspective view showing elements for fabricating a phase conjugate mirror, illustrating the condition after a single crystalline fiber is bonded to a copper plate;

Fig. 10 is a schematic view showing a system for measurement of the performance of a phase conjugate mirror;

Fig. 11 is a schematic view showing an SBN single crystalline fiber, illustrating interaction of lights with each other in a phase conjugate mirror; and

Fig. 12 is a schematic top view showing an optical amplifier according to an embodiment of the present invention.

For better understanding of the present invention by the readers, the principle of photorefractive effect will be described below.

The term "photorefractive effect" is meant a phenomenon that upon irradiation with light, the refractive index of a material changes. This effect can be observed when a single crystal having an electro-optic effect such as $LiNbO_3$, $Sr_xBa_{1-x}Nb_2O_6$ and the like upon irradiation with laser beam. The principle thereof is as follows. Electro-optic crystals have large energy gaps between their valence band and conduction band, thus generating no carrier as a result of transition between the bands upon irradiation with visible light. However, presence of localized state due to defects such as impurities allows free carriers to be excited with light from that state. Here, for simplification's sake, assumption is made that the trap levels in part are occupied by electrons and other part is empty. For example, in the case of $LiNbO_3$ containing iron as an impurity, both $Fe^{2+}$ and $Fe^{3+}$ ions exist in the crystal and the former has a level occupied by electrons and the latter has an empty level. Before irradiating the crystal with light, these levels distribute uniformly throughout the crystal. Therefore, charge distribution is also uniform under electrically neutral conditions. Irradiation of laser beam or the like to the crystal to generate interference fringes. Then, electrons (or holes) as a carrier are excited up to the conduction band (or valence band) from the trap level in a region where the light intensity is high so that free electrons (or holes) are generated. The electrons migrate in the crystal and are trapped by impurity or empty levels somewhere. If a free electron is trapped by an empty level in a bright region, where light intensity is high, the electron is to be excited to the conduction band and to migrate again. However, if a free electron is trapped in a dark region, where intensity is low, the electron is never excited and is staying there. Consequently, population of trapped electron decreases in bright regions and increases in dark region. Therefore, the bright regions are positively charged whereas the dark regions are negatively charged. As a result, the distribution of charges is modulated in the same pattern as that of the distribution of light intensity so that there occurs an electric field which is modulated similarly. Since the crystal has electro-optic effects, the modulated electric field modulates the refractive index of the crystal, which diffracts light. After the irradiation is terminated, the electrons (or holes) trapped by the trap levels remain in their position as they are in a trapped state and they are stored until another irradiation occurs to effect optical excitation.

This phenomenon is utilized in the technology of holography as follows. A highly interfering light having an coherence length of more than several centimeters, such as Ar-ion laser beam, is divided into two beams, which are irradiated onto a holographic storage medium simultaneously at different angles. One of the beams conveying no information, such as a plane wave, called a "reference beam", the other carrying image information, called an "object beam". Simultaneous irradiation with both reference and object beams creates interference fringes of light in the medium. Therefore, based on the principle explained above, there appears fringes of refractive index in a pattern which corresponds to that of interference fringes (storage operation or recording). This pattern of refractive index is called a hologram. After a hologram is formed, irradiation of a reference beam alone results in diffraction by the hologram to reproduce the object beam that was irradiated before. The reproduced object beam is usually called a "diffracted beam" in order to distinguish it from an object beam used for recording a hologram.

The ratio, $\eta$, of the intensity, $I_D$, of a diffracted beam to the intensity, $I_R$, of a reference beam irradiated for reproducing the object beam is called a diffraction efficiency.

$$\eta = I_D/I_R$$

The rate of hologram formation depends on the intensity of beam. In the case where the diffraction efficiency is sufficiently small as compared with unity and the light intensity I is the sum of the reference and object beams, the diffraction efficiency after recording for t seconds is approximated by the equation:

$$\eta = (sIt)^2.$$

Here, s is light sensitivity. Usually, s is greater as more carriers are excited by the same intensity of beam.

The electrons (or holes) trapped by the trap levels are also excited thermally as well as with light though at least probabilities up to the conduction band (or valence band) and diffuse. As a result, the charge distribution becomes balanced gradually so that the hologram is disappearing.

$$H = \eta_0 \exp(-\frac{t}{\tau})$$

The time in which the intensity of a diffracted beam reaches the value half or 1/e time the intensity just after the storage or recording is defined as a lifetime. In many applications including holographic memories and the like, it is desired that the light sensitivity, s, be as large as possible and the storage lifetime, $\tau$, be as long as possible. Although they differ from each other in that one is affected by light and the other by heat, the two amounts depend on the probability of excitation of carriers. Thus, in many cases, these amounts are mutually related or in a trade-off relationship that holograms having higher light sensitivity are shorter in lifetime.

Photoconductivity which governs light sensitivity and dark conductivity which governs lifetime of the device depend on the relationship between the trap level and band, and the values of light sensitivity and dark conductivity are difficult to anticipate by the current technology. The following interpretation is given to the role of Ce in an SBN crystal.

Ce has two stable valence states, i.e., trivalent ($Ce^{3+}$) and tetravalent ($Ce^{4+}$), and in a Ce-added SBN single crystal, there exist $Ce^{3+}$ ions and $Ce^{4+}$ ions. Addition of Ce allows light absorption at wavelengths near 500 nm which is not observed in pure SBN single crystals. This is believed to be attributable to excitation of electrons in the 4f orbital of $Ce^{3+}$ ions to the conduction band as a result of absorption of light at such wavelengths. When excited to the conduction band, electrons from $Ce^{3+}$ ions migrate throughout the crystal, leaving behind the $Ce^{4+}$ ions and will before long be trapped by other $Ce^{4+}$ ions. The $Ce^{4+}$ ions that trapped electrons are converted to $Ce^{3+}$ ions. Therefore, there are two ion distributions, which causes photorefractive effects. Since many of generally used lasers, such as Ar-ion laser and SHG solid laser, have wavelengths near 500 nm and light in such a wavelength region excites electrons efficiently so that high light sensitivity can be obtained.

In the present invention, Eu, which has an ion diameter of a similar size as that of Ce and has two stable valence states similarly to Ce, is added in order to utilize high light sensitivy by Ce and attain a long lifetime. Having substantially the same ion diameter as that of Ce indicates a high possibility that Eu will occupy a position similar to that occupied by Ce in the crystal lattice when Eu is introduced into SBN during growing a SBN single crystal. Therefore, presence of Eu affects the position of Ce, i.e., the position of Ce in the crystal lattice changes from that to be inherently occupied by Ce in the absence of Eu. This changes the relationship between the conduction band and Ce ions. Eu has two stable valences, i.e., divalent and trivalent and, hence, can trap and release electrons similarly to Ce. Therefore, there occurs transfer of electrons between Ce ions and Eu ions. By these two effects, electrons are trapped by interband levels from that electrons are easily excited to the conduction band with light irradiation but rarely excited thermally, so that holograms can be realized that have a high light sensitivity and a long lifetime.

Within the composition range of $0.25 \leqq x \leqq 0.75$, $Sr_xBa_{1-x}Nb_2O_6$ has a crystal structure of a tungsten bronze type, and is a ferroelectric material having a stable, spontaneous polarization. For this reason, the SBN of the present invention is featured in that it is easy to handle in contrast to $BaTiO_3$ having a 90° domain. As x varies, the phase transition temperature varies and dielectric constant, spontaneous polarization and electro-optic coefficient at room temperature vary. Among the compositions of the present invention, the crystal having the composition x=0.75 has the greatest electro-optic coefficient and seems to be promising. On the other hand, the composition of $Sr_xBa_{1-x}Nb_2O_6$ where x=0.61 is a unique congruent composition which allows easy growing of a single crystal as compared with other compositions (x is other than 0.61) so that crystals can be grown at high rates and the resulting crystals have high quality although at x=0.61, the electro-optic coefficient is slightly smaller than that at x=0.75. The addition of both Ce and Eu gives substantially no adverse influence on the dielectric properties of SBN single crystals as far as they are added in respective amounts of no more than 0.5% by weight and, hence, lifetime and light sensitivity can be improved with any one of the SBN compositions wherein x is within the range of $0.25 \leqq x \leqq 0.75$. As stated above, the composition at x=0.61 is most promising from the viewpoint of production on an industrial scale. Sometimes, the composition at x=0.75 may be used for applications where high electro-optic coefficients are of primary importance.

Table 1

| Composition (x) | 0.75 | 0.61 | 0.50 |
|---|---|---|---|
| Electro-optic coefficient ($r_{33}$) | 1400 | 420 | 180 |
| Crystal Property | Incongruent | Congruent | Incongruent |
| Crystal Growth | Difficult | Easy | Difficult |

Here, by the term "congruent composition" is meant a composition of which a solid when heated and molten and then cooled to solidify gives the same composition as that of the original solid before such treatment. In the case of SBN, the composition where x=0.61 is considered to be congruent. When raw material powder having a composition other than x=0.61 is molten and then cooled, Sr and Ba contained in the crystal which deposited are present in a Sr/Ba ratio which differs from that of the starting composition. In incongruent compositions, problems occur not only that the composition varies to some extent but also that it is difficult to grow high quality crystals. For example, if the speed of pulling up a single crystal is too high, there occurs fluctuation in composition in a pattern of fringe parallel to the direction of the pulling up due to a constitutional supercooling phenomenon to form a cellular structure, deteriorating optical qualities of the single crystal obtained. Attempts to prevent such a phenomenon by reducing the pulling up speed to sufficiently low levels are not completely satisfactory since it is difficult to completely prevent a fluctuation in refractive index (striation or the like) from occurring. Regarding the congruent composition of $Sr_xBa_{1-x}Nb_2O_6$, reference is made to K. Megumi, N. Nagatsuma, Y. Kshiwada, Y. Furuhata, "The congruent melting composition of strontium barium niobate", Journal of Material Science, 11 (1976) 1583-1592.

Hereafter, the present invention will be described in further detail by way of examples. However, the present invention should not be construed as being limited thereto.

Embodiment 1 Holographic storage medium

This embodiment explains an embodiment I which the present invention is applied to a holographic storage medium.

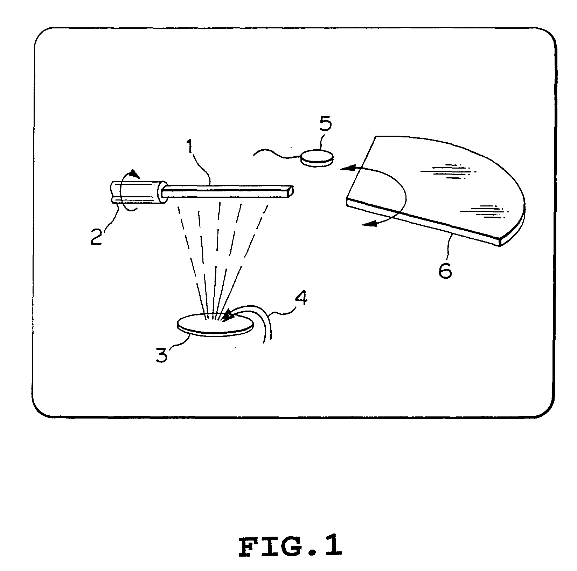

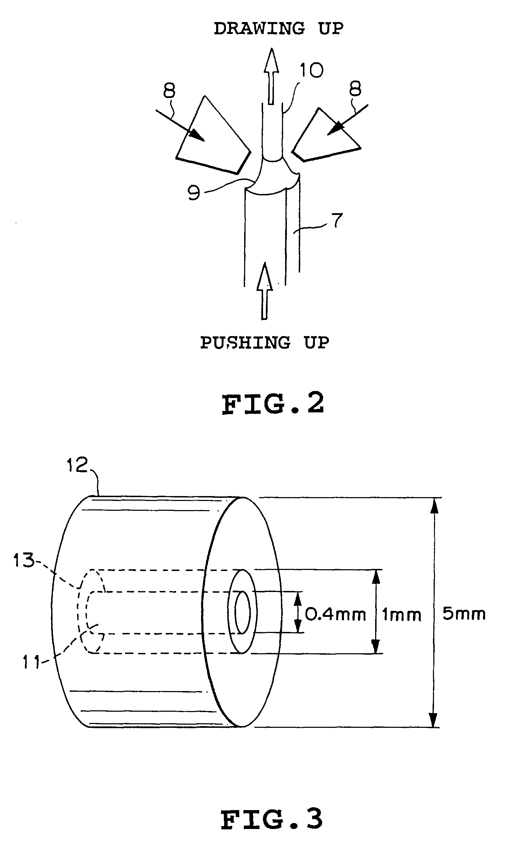

Figs. 1 and 2 are schematic diagrams illustrating a method of producing a holographic storage medium according to an embodiment of the present invention. Fig. 1 illustrates an embodiment of a method of preparing a single crystal of strontium barium niobate (hereafter, SBN) according to the present invention, more particularly a single crystal having a composition of $Sr_{0.61}Ba_{0.39}Nb_2O_6$ (hereafter, "$SBN_{61}$") having doped therein cerium (Ce) and europium (Eu) as impurities (hereafter, "$Ce,Eu:SBN_{61}$"). First, a $SBN_{61}$ single crystal containing cerium as an impurity was grown by conventional Czochralski process. Ce was charged such that 0.1% by weight based of $SBN_{61}$ of $CeO_2$ was added, which corresponded to a Ce concentration of $1.8 \times 10^{19} cm^{-3}$. The thus obtained single crystal was cut out a square rod 1 of a size of 0.75mm x 0.75mm x 20mm. The rod 1 was mounted on a rotary jig 2 and while it is rotated metallic europium 3 was heated by electron beam 4 so that Ce deposited on the rod 1. A thickness meter 5 arranged in the vicinity of the rod 1 measures the thickness of the resulting film. The thickness of the deposited film was controlled by a shutter 6 in the form of a sector which rotated and intermittently cuts the vapor flow from the metallic europium 3. The thickness meter 5 indicated 25 nm, from which an average thickness of europium on a side of the square rod 1 was calculated to be 25 nm/3.14=7.96 nm. The weight ratio of europium was calculated to be about 0.004% by weight. In a manner similar to the above, various rods 1 were prepared having different compositions with 0.01% by weight, 0.02% by weight, and 0.2% by weight of europium. Then, as illustrated in Fig. 2, the above-described $SBN_{61}$ containing Ce (hereafter, $Ce:SBN_{61}$) having Eu deposited around its periphery was used as a source rod 7 for growing a single crystalline fiber comprised by $Eu,Ce:SBN_{61}$ by a laser heated pedestal growth method. By the laser heated pedestal growth method used herein, carbon dioxide gas laser beam 8 (output: 30W) was focused on the tip of the source rod 7, and after the focused portion was molten to form a molten portion 9, a $SBN_{61}$ seed crystal 10 was dipped in the molten portion 9 from above. While the carbon dioxide gas laser beam 8 was continued to be irradiated, the source rod 7 was pushed upwards and the seed crystal 10 was pulled up simultaneously. The speed of pushing up the source rod 7 and that of pulling up the seed crystal 10 were controlled to grow a $SBN_{61}$ single crystal fiber of 0.4 mm in diameter. Here, when the source rod 7 was molten, the Eu metal deposited around the periphery was incorporated into the molten portion 9 and the single crystal fiber pulled up contained both Ce and Eu. The crystalographic c-axis of the seed crystal 10 was perpendicular to the ground and in the plane of paper sheet in Fig. 2. The single crystal fiber thus grown has a crystalographic c-axis in the longitudinal direction of fiber.

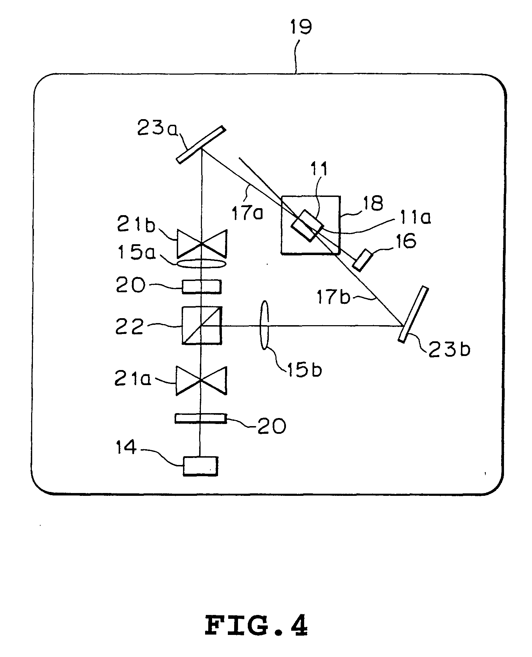

Figs. 3 and 4 illustrate measurement of the lifetime of a hologram. Fig. 3 is a perspective view showing a sample used for the measurement of the lifetime of a holographic storage medium and Fig. 4 is a schematic diagram showing an apparatus for measuring the lifetime of a holographic storage medium.

As shown in Fig. 3, a fiber 11 of Ce,Eu:SBN$_{61}$ fabricated as described above was cut to a length of about 4 mm and settled in a silica tube 12 with an adhesive 13, and both ends of the resulting cylindrical body were subjected to optical figuring including grinding. Then, the fiber was further treated to render the poling of the crystal. More specifically, single domain formation was performed by forming electrodes of silver paste on both ends of the fiber 11, dipping the fiber 11 in a silicone oil bath, elevating the temperature of the bath to about 100°C with applying a voltage of 1.25 kV between the electrodes, and then gradually decreasing the temperature of the bath to room temperature in about 30 minutes, setting the voltage between the electrodes to 0V, and finally removing the silver paste with acetone.

Further, as shown in Fig. 4, an Ar-ion laser 14 having a wavelength of 514.5 nm was used as a light source. Light from the Ar-ion laser 14 was transmitted through a lambda/2 plate 20, a shutter 21a and split to two beams 17a and 17b by a polarizing beam splitter 22, one beam 17a further traveling through a lens 15a and a shutter 21b and reflected by a mirror 23a, and the other beam 17b traveling through a lens 15b and reflected by a mirror 23b. The object and reference beams 17a and 17b, respectively, input through different ends of the fiber 11. A detector 16 is arranged near one side 11a of the fiber 11. The optical axis of this system was slightly deviated from the longitudinal axis of the fiber 11 in order for the detector 16 not to shut the reference beam 17b. The whole system was shielded with a shield plate 19 made of a black acrylic polymer so that light from outside was completely shut out. The sample fiber 11 was kept at a constant temperature using a Peltier element 18. First the sample fiber 11 was kept at a constant temperature by the Peltier element 18 and the object beam 17a and the reference beam 17b were irradiated simultaneously to write a hologram into the fiber 11. Subsequently, the object beam 17a and the reference beam 17b were shut out, with occasional irradiation of the reference beam 17b only to determine the intensity of diffracted light and examine a dependence of the light intensity on storage time at that temperature. Similar measurements were made at various temperatures.

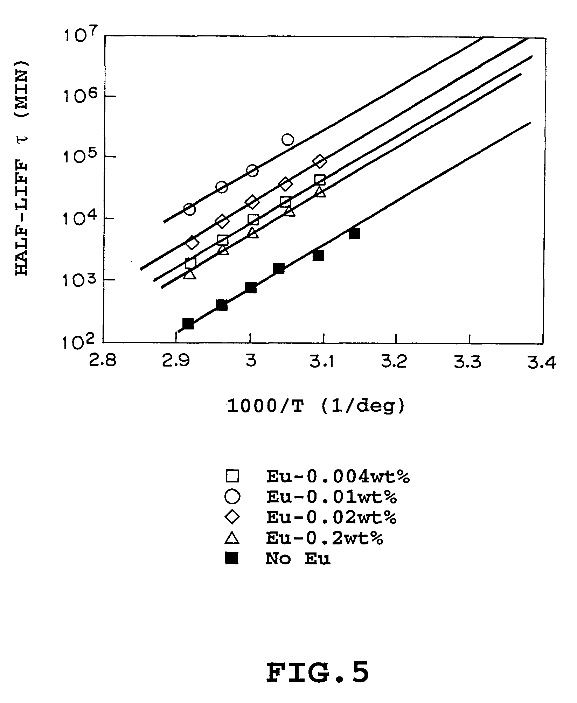

Fig. 5 illustrates a dependence on temperature of the half-life of diffracted light intensity of a holographic storage medium. The vertical axis indicates a half-life of the intensity of diffracted light on a logarithmic scale, the horizontal axis indicating values in a reciprocal of absolute temperature multiplied by a factor of 1,000. Symbols square (□), circle (○), lozenge (△), and triangle indicate results of measurements at Eu contents of 0.004% by weight, 0.01% by weight, 0.02% by weight, and 0.2% by weight, respectively. For reference, a symbol solid square (■) indicates the results obtained with Ce-0.1 wt.%:SBN$_{61}$ containing no Eu. The content of Ce was made the same for all the samples. The half-life $\tau$ of each sample well followed the Arrhenius's law as follows:

$$\tau = \tau_0 \exp\left(- \frac{E}{k_B T}\right) \tag{1}$$

where E is activation energy, $k_B$ is a Boltzmann constant, and T is an absolute temperature. Extrapolating to room temperature (25°C), the lifetime can be expected to be 0.4 year for Ce:SBN$_{61}$ containing no Eu in contrast to 3 to 38 years for SBN61 containing both Ce and Eu. This indicates that the addition of Eu prolongs the lifetime to a greater extent.

At a wavelength of 514.5 nm, the light sensitivity of Ce,Eu:SBN$_{61}$ containing 0.01% by weight of Eu and 0.1% by weight of Ce is about 3 times as high as the light sensitivity of Ce-0.1 wt.%:SBN$_{61}$ containing no Eu. In other words, a hologram was stored in Ce,Eu:SBN$_{61}$ containing 0.01% by weight of Eu in a time of one third of the time required for storing in Ce-0.1 wt.%:SBN$_{61}$ containing no Eu.

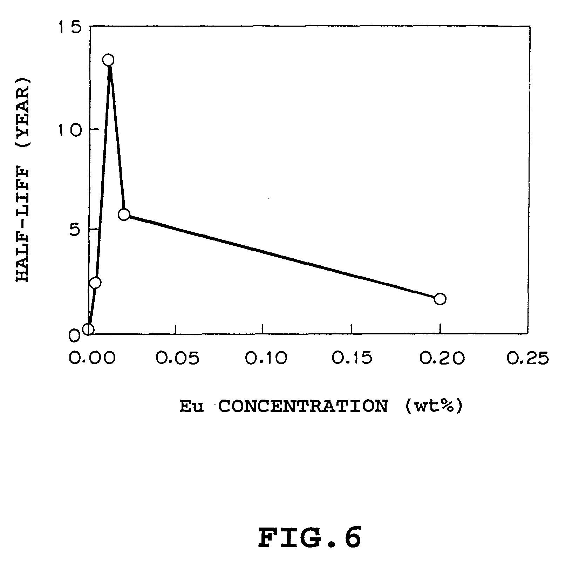

Fig. 6 is a graph which plots an expected lifetime of a holographic storage medium at 27°C from the data illustrated in Fig. 5, indicating relationship between the expected lifetime and the amount of europium added. The amount of Ce added was 0.1% by weight. Fig. 6 shows that an optimum value of Eu content exists around 0.01% by weight based on the weight of the SBN61 used.

In a variation, a SBN$_{61}$ single crystal containing both Ce and Eu as impurities may be grown from the beginning by a single crystal growing process such as the conventional Czochralski process, TSSG (Top Speed solution Growth) process or the like. The raw material for melting includes strontium, barium, niobium, and oxygen as main components and a small amount of cerium and europium. The raw material may, for example, be mixtures of powders of strontium carbonate, barium carbonate, niobium pentoxide, cerium dioxide, and europium oxide. Heat treatment at no lower than 800°C prior to crystal growth allows to release carbon in the form of carbon dioxide to ambient air.

Next, a single crystal was grown by the conventional Czochralski process. More particularly, $Sr_{0.61}Ba_{0.39}Nb_2O_6$ which had been sintered and divided to form powder in advance was mixed with $CeO_2$ powder and $Eu_2O_3$ powder each in an amount of 0.1% by weight based on the weight of the SBN$_{61}$ used. The raw material powder mixture was placed in a platinum crucible and molten at a temperature of no lower than 1,500°C and a seed crystal was dipped in the melt from above. The seed crystal was pulled up to grow a Ce,Eu-containing SBN single crystal. A 3mmx5mmx10mm sample was cut out of the crystal and both ends of the cut crystal sample were optical figured before poling treatment. The samples were measured of lifetime at various temperatures and examined for a dependence of their lifetime on temperature. The results of measurement show linearity in Arrhenius plot, with its inclination being the same as that show in Fig. 5. Estimated lifetime at 25°C was 12 years.

The light sensitivity of the above-described Ce,Eu:SBN$_{61}$ was 1.5 times the light sensitivity of the Ce,Eu: SBN$_{61}$ containing 0.01% by weight of Eu fabricated by laser heated pedestal growth method (LHPG) as shown in Fig. 2.

In addition to SBN$_{61}$, there were examined SBN$_{75}$ and SBN$_{50}$ single crystals (Fig. 1) containing Ce with or without further addition of Eu and light sensitivity and lifetime were compared so that it was confirmed that the composition containing Eu was superior to the composition containing no Eu similarly to the case of SBN61. Although light sensitivity and lifetime depended on growth conditions, an optimal content of Eu was also around 0.01% by weight for the content of Ce being 0.1% by weight.

As described above, SBN crystals containing therein both Ce and Eu have a light sensitivity for refractive index modulation higher than that of the SBN61 containing Ce alone and attenuation of refractive index modulation when stored in the dark at room temperature (25°C) was retarded. In other words, a holographic storage medium having a high recording speed and an improved data storage stability can be obtained.

Embodiment 2

Examples of lifetime and light sensitivity for various compositions

This embodiment illustrates variation of lifetime and light sensitivity depending on difference in composition. SBN single crystals were fabricated in the same manner as in Example 1 except that the contents of Ce and Eu were 0.1% by weight and 0.01% by weight, respectively, for all the compositions with varying the amounts of Sr and Ba. Table 2 shows lifetime and light sensitivity of the resulting SBNs. Here, lifetime was expressed in terms of half-life of diffraction efficiency and light sensitivity was expressed in terms of $S_\eta{}^{-1}$.

$$s_\eta{}^{-1} = [\frac{1}{d}\ \frac{\partial \sqrt{n}}{\partial (\alpha W)}]^{-1}$$

where $\eta$ is diffraction efficiency, d is a length of a single crystal in the direction along which light transmits, $\alpha$ is absorption coefficient of light, W is a recording energy density, which is a product of light intensity and time. Evaluating by $S\eta^{-1}$, the light sensitivity is higher as the value is smaller, indicating that less light energy is required for recording. In any of the compositions, lifetime obtained was much longer than that of the conventional compositions and light sensitivity was higher than that of the conventional compositions.

Table 2

| Composition (x) | Lifetime (Half-life) | $S_\eta{}^{-1}(J/m^2)$ |
|---|---|---|
| 0.73 | no shorter than 40 years | 300 |
| 0.67 | about 40 years | 150 |
| 0.61 | 38 years | 60 |
| 0.48 | 25 years | 90 |
| 0.25 | about 40 years | 120 |

Embodiment 3 Phase Conjugate Mirror

This embodiment illustrates an embodiment in which the present invention is applied to a phase conjugate mirror.

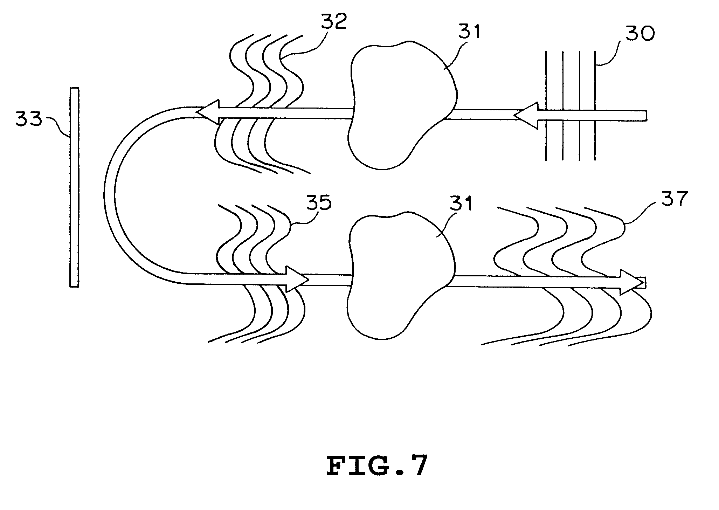

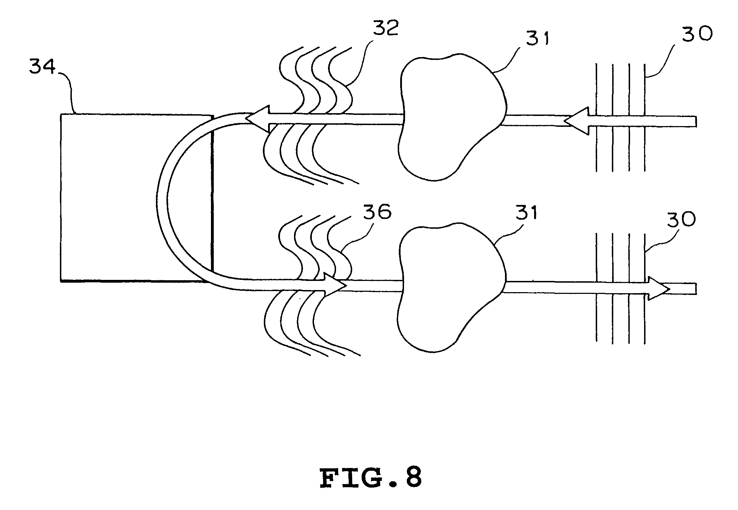

Fig. 7 is a schematic view showing an ordinary mirror, illustrating the action of reflection of light and Fig. 8 is a schematic view showing a phase conjugate mirror according to an embodiment of the present invention, illustrating the action of reflection of light.

A plane wave 30 having a regular pattern undergo phase disturbance while transmitting through a phase disturbing object 32, such as a plastic plate having an irregular shape, air flickering due to heat, or the like and the wavefront is disturbed. When the disturbed wave 34 is input in a mirror, it behaves differently whether the mirror is an ordinary mirror or a phase conjugate mirror. As shown in Figs. 7 and 8, when waves are reflected by an ordinary mirror 33 and a phase conjugate mirror 34, respectively, reflected waves 35 and 36 reflected by the mirrors 33 and 34, respectively, have opposite wavefronts. The reflected waves 35 and 36 travels back via the route which they traveled through the phase disturbing object 31 again. As a result, with the use of the ordinary mirror 33, the wavefront becomes a wave 37 which has a further disturbed wavefront. In contrast, when use is made of the phase conjugate mirror 34 which reflects a wave having an inverted wavefront, returning through the phase disturbing object 31 cancels the disturbance to give a plane wave 30 with a wavefront having the original regular pattern. The wave with a wavefront having a reversed pattern is in a phase conjugate relation with respect to the input wave and is called a "phase conjugate wave".

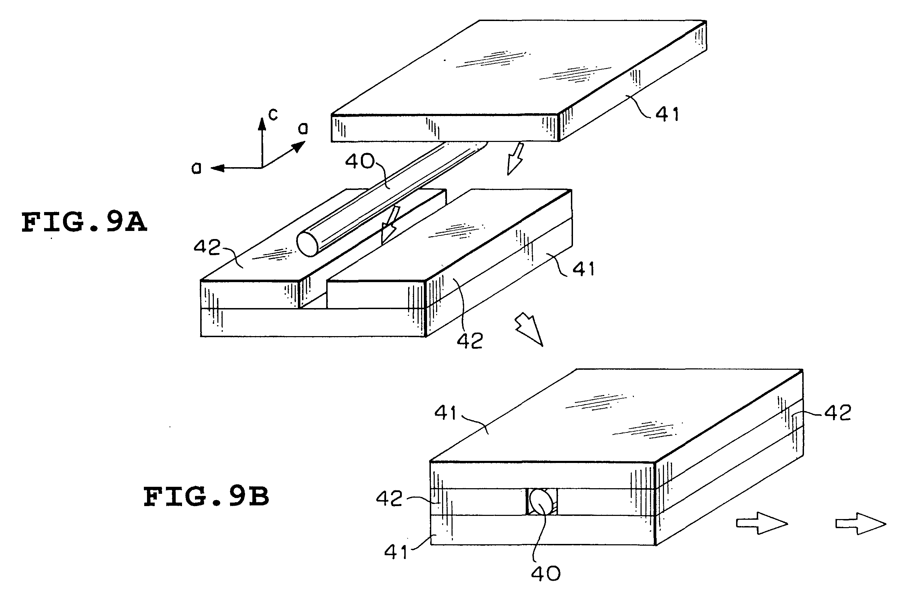

In this embodiment, a SBN single crystal fiber drawn up in the a-axis direction was used as a phase conjugate mirror (Figs. 9A and 9B). Since the crystal axis along which the crystal was drawn up was different, the method of fabrication was slightly different from that of the sample of which lifetime was determined. The method used is described below.

The source rod was fabricated in the same manner as in Embodiment 1. In this embodiment, two single crystal rods were provided. One was a single crystal rod having the composition of x=0.61 and 0.1% by weight of Ce and another was a single crystal rod having the composition of X=0.61 and 0.1% by weight of Ce and a metal Eu film on the surface thereof. In a laser heated pedestal single crystal growing apparatus, drawing up of a fiber can be achieved by dipping a seed crystal in the molten portion of the rod so that the a-axis of the seed crystal is directed in the direction of drawing up of the fiber. The concentration of Eu in the single crystal fiber grown with addition of Eu was calculated to be 0.01% by weight. The drawn up single crystal fiber 40 was used to fabricate a sample as follows. First, as shown in Fig. 9A, two glass plates 42 were placed in parallel side by side with a space on a rectangular copper plate 41 with a smooth finished surface. These elements were bonded with a resin. The plates 42 were arranged with a gap corresponding to the diameter (about 0.5 mm) of the single crystal fiber 40. The single crystal fiber 40 was inserted in the gap by placing it with the crystalographic c-axis being directed perpendicular to the surface of the copper plate 41. Next, a resin 43 was cast from above and another copper plate 41 was placed. After the resin 43 was fixed, the single crystal fiber 40 was fixed to the copper plates with the crystalographic c-axis being perpendicular to the plates 41 and 41. Application of a high voltage between the copper plates 41 and 41 allows poling to occur in the direction of the crystalographic c-axis. After optical figuring of the both ends of the single crystal fiber 40 together with the copper plates 41 and 41, the sample was placed in an oil bath at a temperature of no lower than 100°C and left to stand to cool down to room temperature while applying a voltage of 500 V to align spontaneous polarization in the direction of the crystalographic c-axis of the crystal, thereby making the polarization a single domain.

Measurement

The characteristics of the phase conjugate mirrors were determined.

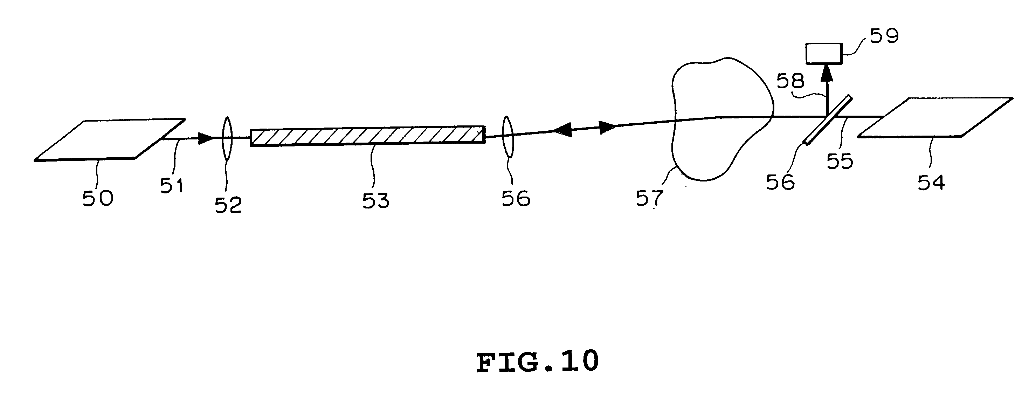

Fig. 10 is a schematic view showing a system for measurement of the performance of a phase conjugate mirror. Although the copper plates may be removed from the sample after the treatment as shown in Fig. 10 so that the experiment can be conducted with bare fibers, the actual measurements were performed using fibers with the copper plates being retained as they were. However, no substantial difference would be observed when measured with or without copper plates.

As shown in Fig. 10, a Nd:YAG (neodymium-doped yttrium aluminum garnet) laser 50 output 532 nm laser beam (pump beam) 51 which is a second harmonic, which was collected with a lens 52 and input into a single crystal fiber 53 through one of its end surfaces. On the other hand, a 532 nm YAG laser 54 having the same construction as the laser 50 output a laser beam (signal beam) 55, which was focused on the opposite end surface of the single crystal fiber 53 through a lens 56. On this occasion, a half mirror 57 and a plastic plate 57 as a phase disturbing object were inserted in the midway of the light path on the right hand side in Fig. 10 and the returning light 58 reflected by the single crystal fiber 53 (phase conjugate light) was monitored by a detector 59. The direction in which the electric field of the laser beam oscillates was made parallel to the direction of the crystalographic c-axis of the single crystal. This optical system is called DPC (Double Phase-Conjugation) or MPPC (mutually Pumped Phase Conjugation).

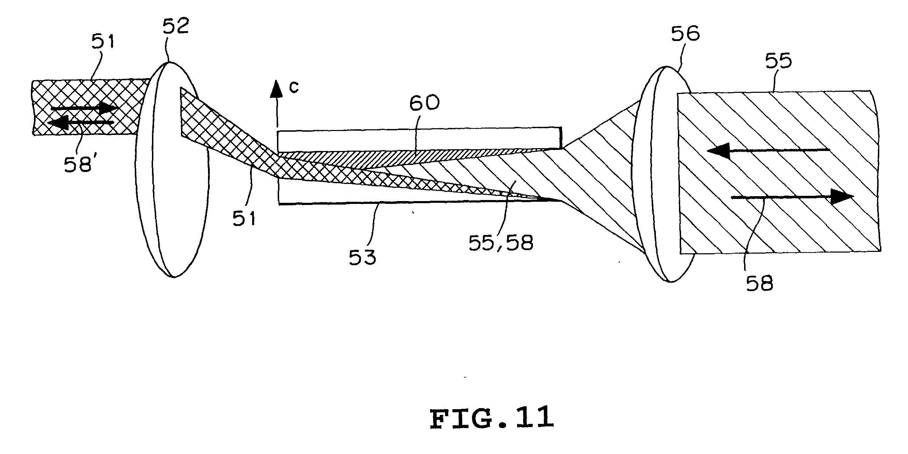

Fig. 11 illustrates the Interaction of lights in the above system. As shown in Fig. 11, a pump beam 51 is collected by a lens 52 and input into an end of the single crystal fiber 53 and returns as a phase conjugate light 58'. On the other hand, the signal light is input through another end of the single crystal fiber 53 and returns as a phase conjugate light 58. Inside the single crystal fiber 53, there arises a fanning light interference region 60. In Fig. 10 and Fig. 11, the left hand side laser 50 and the right hand side laser 54 are separate and are not coherent with each other. However, light interacts with each other by way of reflection on side surfaces of the single crystal fiber and/or fanning phenomenon so that a phase conjugate light is obtained from the both input lights.

In order to confirm the generation of a phase conjugate wave, first an ordinary mirror (33 in Fig. 7) was placed in place of the single crystal fiber 53. Then, a plastic plate 57 as a phase disturbing object was inserted. This decreased the light intensity observed by the detector 59 to one fifth. A screen (not shown) placed in the position in which the detector 59 was placed was reflected a considerably disturbed light pattern. Next, the single crystal fiber 53 was placed in place of the ordinary mirror. Several seconds after the irradiation of laser, the light intensity observed by the detector 59 reached a steady state. Upon insertion of the plastic plate 57, the light intensity decreased to some extent due to the reflection on the surface of the plastic plate 57 down to one half the original but no further. No disturbance was observed in the light pattern. Therefore, generation of a phase conjugate wave was confirmed. The time form the irradiation of laser to the reaching the steady state required for the $Cu,Eu:SBN_{61}$ containing 0.01% by weight of Eu was one third of that required for the sample containing no Eu under the same conditions. Upon precision measurement for measuring a distance using laser beam, use of a phase conjugate mirror in place of an ordinary mirror allows measurements free of or with minimized, if any, influences of flickering of air in the light path. Furthermore, it was confirmed that use of the Ce,Eu:SBN single crystal fiber of the present invention as a phase conjugate mirror permits the fiber to respond in a higher speed than the conventional ones and to follow high speed air flickering.

Embodiment 4 Optical Amplifier

This embodiment illustrates application of the present invention to an optical amplifier.

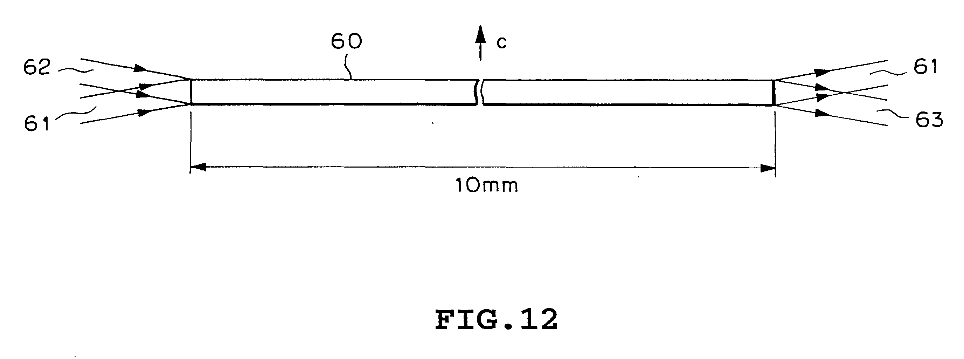

Fig. 12 . As shown in Fig. 12, which is a schematic top view showing an optical amplifier according to an embodiment of the present invention, two beams of a second harmonic of a Nd:YAG laser (not shown) were input into a SBN single crystal fiber 60 fabricated in the same manner as in Embodiment 3 to amplify light. One of the beams was a pump beam 61 at an intensity of 20 $W/m^2$, the other being a signal beam contemplated to be amplified, or an input beam 62, at an intensity of 20 $W/m^2$. The input beam passes through the SBN single crystal fiber 60 to exit as an output beam 63. The direction of oscillation of electric field of light was made parallel to the crystalographic c-axis of the single crystal fiber. The length of the single crystal fiber in the direction in which light propagates is about 10 mm. As the single crystal fiber were used $Sr_{0.61}Ba_{0.39}Nb_2O_6$ containing 0.1% by weight of Ce or $Sr_{0.61}Ba_{0.39}Nb_2O_6$ containing 0.1% by weight of Ce and 0.01% by weight of Eu. In both of them, the signal beam 62 exhibited a gain of about 20 times (13 dB). However, with respect to the response speed, the sample of $Ce,Eu:SBN_{61}$ containing 0.01% by weight of Eu was about 3 times quicker than the sample of SBN containing 0.1% by weight of Ce, thus confirming that an improved in response speed was made in an optical amplifier.

The present invention has been described in detail with respect to various embodiments, and it will now be apparent from the foregoing to those skilled in the art that changes and modifications may be made without departing from the invention in its broader aspects, and it is the intention, therefore, in the appended claims to cover all such changes and modifications within the scope of the claims.

**Claims**

1. An optical material **characterized by** comprising a strontium barium niobate single crystal containing europium and cerium as impurities.

2. The optical material as claimed in claim 1, **characterized in that** said strontium barium niobate single crystal has a composition represented by chemical formula:

$$Sr_xBa_{1-x}Nb_2O_6$$

wherein x satisfies $0.25 \leqq x \leqq 0.75$.

3. The optical material as claimed in claim 1, **characterized in that** said strontium barium niobate single crystal has a congruent molten composition.

4. The optical material as claimed in claim 1, **characterized in that** said strontium barium niobate single crystal has a chemical formula:

$$Sr_{0.61}Ba_{0.39}Nb_2O_6.$$

5. A method of producing an optical material, **characterized by** comprising the steps of:

   providing a mixture of strontium, barium, niobium and oxygen as major ingredients and cerium and europium as impurities; and

growing a single crystal **characterized by** comprising strontium barium niobate containing europium and cerium as impurities by a single crystal growth method.

6. A method of producing an optical material, **characterized by** comprising the steps of:

growing a strontium barium niobate single crystal having a composition of $Sr_{0.61}Ba_{0.39}Nb_2O_6$ by a single crystal growth method or a composition having Sr:Ba proportion changed within a range of $\pm$ 10%;
making a rod from the strontium barium niobate single crystal;
depositing at least one of cerium and europium on said rod: and
incorporate in the single crystal the at least one of cerium and europium as impurity or impurities by a pedestal growth method.

7. A holographic storage medium **characterized by** comprising a strontium barium niobate single crystal containing europium and cerium as impurities.

8. The holographic storage medium as claimed in claim 7, **characterized in that** said strontium barium niobate single crystal has a composition represented by chemical formula:

$$Sr_xBa_{1-x}Nb_2O_6$$

wherein x satisfies $0.25 \leqq x \leqq 0.75$.

9. The holographic storage medium as claimed in claim 7, **characterized in that** said strontium barium niobate single crystal has a congruent molten composition.

10. The holographic storage medium as claimed in claim 7, **characterized in that** said strontium barium niobate single crystal has a chemical formula:

$$Sr_{0.61}Ba_{0.39}Nb_2O_6.$$

11. An optical device including an element, which comprises an optical material **characterized by** comprising a strontium barium niobate single crystal containing europium and cerium as impurities.

12. The optical device as claimed in claim 11, **characterized in that** said element is a phase conjugate mirror.

13. The optical device as claimed in claim 12, **characterized in that** said strontium barium niobate single crystal has a composition represented by chemical formula:

$$Sr_xBa_{1-x}Nb_2O_6$$

**characterized in that** x satisfies $0.25 \leqq x \leqq 0.75$.

14. The optical device as claimed in claim 12, **characterized in that** said strontium barium niobate single crystal has a congruent molten composition.

15. The optical device as claimed in claim 12, **characterized in that** said strontium barium niobate single crystal has a chemical formula:

$$Sr_{0.61}Ba_{0.39}Nb_2O_6.$$

16. The optical device as claimed in claim 11, **characterized in that** said element is an optical amplifier.

17. The optical device as claimed in claim 16, **characterized in that** said strontium barium niobate single crystal has a composition represented by chemical formula:

$$Sr_xBa_{1-x}Nb_2O_6$$

**characterized in that** x satisfies $0.25 \leqq x \leqq 0.75$.

18. The optical device as claimed in claim 16, **characterized in that** said strontium barium niobate single crystal has a congruent molten composition.

19. The optical device as claimed in claim 16, **characterized in that** said strontium barium niobate single crystal has a chemical formula:

$$Sr_{0.61}Ba_{0.39}Nb_2O_6.$$

**Patentansprüche**

1. Optisches Material, **dadurch gekennzeichnet, dass** es einen Strontiumbariumniobat-Einkristall umfasst, der Europium und Cerium als Verunreinigungen enthält.

2. Optisches Material gemäß Anspruch 1, **dadurch gekennzeichnet, dass** der Strontiumbariumniobat-Einkristall eine Zusammensetzung besitzt, die durch die chemische Formel:

$$Sr_xBa_{1-x}Nb_2O_6$$

dargestellt ist, wobei x erfüllt $0{,}25 \leq x \leq 0{,}75$.

3. Optisches Material gemäß Anspruch 1, **dadurch gekennzeichnet, dass** der Strontiumbariumniobat-Einkristall eine kongruente geschmolzene Zusammensetzung besitzt.

4. Optisches Material gemäß Anspruch 1, **dadurch gekennzeichnet, dass** der Strontiumbariumniobat-Einkristall folgende chemische Zusammensetzung besitzt:

$$Sr_{0{,}61}Ba_{0{,}39}Nb_2O_6.$$

5. Verfahren zum Herstellen eines optischen Materials, **dadurch gekennzeichnet, dass** es die folgenden Schritte umfasst:

Bereitstellen einer Mischung aus Strontium, Barium, Niob und Sauerstoff als Hauptinhaltsstoffe und Cerium und Europium als Verunreinigung; und
Wachsen lassen eines Einkristalls, **dadurch gekennzeichnet, dass** dieser Strontiumbariumniobat umfasst, dass Europium und Cerium als Verunreinigungen enthält, durch ein Einkristallwachstumsverfahren.

6. Verfahren zum Herstellen eines optischen Materials, **dadurch gekennzeichnet, dass** es die folgenden Schritte umfasst:

Wachsen lassen eines Strontiumbariumniobat-Einkristalls mit einer Zusammensetzung von $Sr_{0{,}61}Ba_{0{,}39}Nb_2O_6$ oder einer Zusammensetzung, die ein Sr:Ba besitzt, das innerhalb eines Bereiches von + 10% geändert wird, durch ein Einkristallwachstumsverfahren;
Herstellen eines Stabes aus Strontiumbariumniobat-Einkristalls;
Abscheiden wenigstens eines Elementes aus Cerium und Europium auf dem Stab; und
Einbauen wenigstens eines Elementes aus Cerium und Europium in den Einkristall als Verunreinigung oder Verunreinigungen durch ein Basiswachstumsverfahren.

7. Holographisches Speichermedium, **dadurch gekennzeichnet, dass** es einen Strontiumbariumniobat-Einkristall umfasst, der Europium und Cerium als Verunreinigungen enthält.

8. Holographisches Speichermedium gemäß Anspruch 7, **dadurch gekennzeichnet, dass** der Strontiumbariumniobat-Einkristall eine Zusammensetzung besitzt, die durch die chemische Formel

$$Sr_xBa_{1-x}Nb_2O_6$$

dargestellt ist,
wobei x erfüllt $0,25 \leq x \leq 0,75$.

9. Holographisches Speichermedium gemäß Anspruch 7, **dadurch gekennzeichnet, dass** der Strontiumbariumniobat-Einkristall eine geschmolzene kongruente Zusammensetzung besitzt.

10. Holographisches Speichermedium gemäß Anspruch 7, **dadurch gekennzeichnet, dass** der Strontiumbariumniobat-Einkristall folgende chemische Formel besitzt:

$$Sr_{0,61}Ba_{0,39}Nb_2O_6.$$

11. Optische Vorrichtung, die ein Element einschließt, welches ein optisches Material umfasst, dass **dadurch gekennzeichnet ist, dass** es einen Strontiumbariumniobat-Einkristall umfasst, der Europium und Cerium als Verunreinigungen enthält.

12. Optische Vorrichtung gemäß Anspruch 11, **dadurch gekennzeichnet, dass** das Element ein phasenkonjugierter Spiegel ist.

13. Optische Vorrichtung gemäß Anspruch 12, **dadurch gekennzeichnet, dass** der Strontiumbariumniobat-Einkristall eine Zusammensetzung besitzt, die durch folgende chemische Formel dargestellt ist:

$$Sr_xBa_{1-x}Nb_2O_6,$$

**dadurch gekennzeichnet, dass** x erfüllt $0,25 \leq x \leq 0,75$.

14. Optische Vorrichtung gemäß Anspruch 12, **dadurch gekennzeichnet, dass** der Strontiumbariumniobat-Einkristall eine kongruente geschmolzene Zusammensetzung besitzt.

15. Optische Vorrichtung gemäß Anspruch 12, **dadurch gekennzeichnet**, der Strontiumbariumniobat-Einkristall folgende chemische Formel besitzt:

$$Sr_{0,61}Ba_{0,39}Nb_2O_6.$$

16. Optische Vorrichtung gemäß Anspruch 11, **dadurch gekennzeichnet, dass** das Element ein optischer Verstärker ist.

17. Optische Vorrichtung gemäß Anspruch 16, **dadurch gekennzeichnet, dass** der Strontiumbariumniobat-Einkristall eine Zusammensetzung besitzt, die durch folgende chemische Formel dargestellt ist:

$$Sr_xBa_{1-x}Nb_2O_6$$

**dadurch gekennzeichnet, dass** x erfüllt $0,25 \leq x \leq 0,75$.

18. Optische Vorrichtung gemäß Anspruch 16, **dadurch gekennzeichnet, dass** der Strontiumbariumniobat-Einkristall eine kongruente geschmolzene Zusammensetzung besitzt.

**19.** Optische Vorrichtung gemäß Anspruch 16, **dadurch gekennzeichnet, dass** der Strontiumbariumniobat-Einkristall folgende chemische Formel besitzt:

$$Sr_{0,61}Ba_{0,39}Nb_2O_6.$$

**Revendications**

**1.** Matériau optique, **caractérisé en ce qu'**il comprend un monocristal de niobate de strontium et de baryum contenant de l'europium et du cérium comme impuretés.

**2.** Matériau optique tel que revendiqué à la revendication 1, **caractérisé en ce que** le monocristal de niobate de strontium et de baryum a une composition représentée par la formule chimique :

$$Sr_xBa_{1-x}Nb_2O_6$$

dans laquelle x satisfait à $0,25 \leq x \leq 0,75$.

**3.** Matériau optique tel que revendiqué à la revendication 1, **caractérisé en ce que** le monocristal de niobate de strontium et de baryum a une composition congruente à l'état fondu.

**4.** Matériau optique tel que revendiqué à la revendication 1, **caractérisé en ce que** le monocristal de niobate de strontium et de baryum a la formule chimique :

$$Sr_{0,61}Ba_{0,39}Nb_2O_6.$$

**5.** Procédé de préparation d'un matériau optique, **caractérisé en ce qu'**il comprend les stades qui consistent :

à se procurer un mélange de strontium, de baryum, de niobium et d'oxygène comme ingrédients principaux et de cérium et d'europium comme impuretés ; et
à faire croître un monocristal **caractérisé en ce qu'**il comprend du niobate de strontium et de baryum contenant de l'europium et du cérium comme impuretés par un procédé de croissance d'un monocristal.

**6.** Procédé de préparation d'un matériau optique, **caractérisé en ce qu'**il comprend les stades qui consistent à :

faire croître un monocristal de niobate de strontium et de baryum de composition $Sr_{0,61}Ba_{0,39}Nb_2O_6$ par un procédé de croissance d'un monocristal ou une composition ayant une proportion de Sr:Ba qui est modifiée à $\pm 10\%$ ;
à faire une tige en le monocristal de niobate de strontium et de baryum ;
à déposer au moins l'un du cérium et de l'europium sur la tige ; et
à incorporer dans le monocristal le au moins l'un du cérium et de l'europium sous forme d'impureté ou d'impuretés par un procédé de croissance par paliers.

**7.** Support holographique de données, **caractérisé en ce qu'**il comprend un monocristal de niobate de strontium et de baryum contenant de l'europium et du cérium comme impuretés.

**8.** Support holographique de données tel que revendiqué à la revendication 7, **caractérisé en ce que** le monocristal de niobate de strontium et de baryum a une composition représentée par la formule chimique :

$$Sr_xBa_{1-x}Nb_2O_6$$

dans laquelle x satisfait à $0,25 \leq x \leq 0,75$.

**9.** Support holographique de données suivant la revendication 7, **caractérisé en ce que** le monocristal de niobate

**15**

de strontium et de baryum a une composition congruente à l'état fondu.

**10.** Support holographique de données suivant la revendication 7, **caractérisé en ce que** le monocristal de niobate de strontium et de baryum a la formule chimique :

$$Sr_{0,61}Ba_{0,39}Nb_2O_6.$$

**11.** Dispositif optique comprenant un élément qui comprend un matériau optique, **caractérisé en ce qu'**il comprend un monocristal de niobate de strontium et de baryum contenant de l'europium et du cérium comme impuretés.

**12.** Dispositif optique tel que revendiqué à la revendication 11, **caractérisé en ce que** l'élément est un miroir à conjugaison de phases.

**13.** Dispositif optique tel que revendiqué à la revendication 12, **caractérisé en ce que** le monocristal de niobate de strontium et de baryum a une composition représentée par la formule chimique :

$$Sr_xBa_{1-x}Nb_2O_6$$

dans laquelle x satisfait à $0,25 \leq x \leq 0,75$.

**14.** Dispositif optique suivant la revendication 12, **caractérisé en ce que** le monocristal de niobate de strontium et de baryum a une composition congruente à l'état fondu.

**15.** Dispositif optique suivant la revendication 12, **caractérisé en ce que** le monocristal de niobate de strontium et de baryum a la formule chimique :

$$Sr_{0,61}Ba_{0,39}Nb_2O_6.$$

**16.** Dispositif optique suivant la revendication 11, **caractérisé en ce que** l'élément est un amplificateur optique.

**17.** Dispositif optique suivant la revendication 16, **caractérisé en ce que** le monocristal de niobate de strontium et de baryum a une composition représentée par la formule chimique :

$$Sr_xBa_{1-x}Nb_2O_6$$

dans laquelle x satisfait à $0,25 \leq x \leq 0,75$.

**18.** Dispositif optique suivant la revendication 16, **caractérisé en ce que** le monocristal de niobate de strontium et de baryum a une composition congruente à l'état fondu.

**19.** Dispositif optique suivant la revendication 16, **caractérisé en ce que** le monocristal de niobate de strontium et de baryum a la formule chimique :

$$Sr_{0,61}Ba_{0,39}Nb_2O_6.$$

FIG.1

DRAWING UP

PUSHING UP

# FIG.2

5mm
1mm
0.4mm

# FIG.3

# FIG.4

FIG.5

FIG.6

FIG.7

FIG. 8

**FIG.9A**

40

42

41

41

42

c

a

a

EP 0 824 217 B1

**FIG.9B**

41

42

42

41

40

FIG.10

FIG.11

EP 0 824 217 B1

FIG.12

EP 0 824 217 B1